# EUROPÄISCHE PATENTSCHRIFT

(11) **EP 1 091 837 B1**
(45) Veröffentlichungstag und Bekanntmachung des Hinweises auf die Patenterteilung: **07.04.2004**
(21) Anmeldenummer: 99938211.2
(22) Anmeldetag: 25.06.1999
(51) Int. Cl.: B28C 5/42, F16D 3/18

(54) **HYDROSTATISCH-MECHANISCHES GETRIEBE ZUM ANTRIEB EINER MISCHTROMMEL**
HYDROSTATIC MECHANICAL TRANSMISSION FOR DRIVING A MIXING DRUM
TRANSMISSION HYDROSTATIQUE-MECANIQUE POUR ENTRAINER UN TAMBOUR MELANGEUR

(30) Priorität: 01.07.1998 DE 19829411
(43) Veröffentlichungstag der Anmeldung: 18.04.2001
(73) Patentinhaber: ZF FRIEDRICHSHAFEN Aktiengesellschaft, 88038 Friedrichshafen (DE)
(72) Erfinder: GEBHARD, Wolfgang, D-88048 Friedrichshafen (DE)
(86) Internationale Anmeldenummer: PCT/EP1999/004429
(87) Internationale Veröffentlichungsnummer: WO 2000/001518

(56) Entgegenhaltungen:
- DE-A- 4 313 025
- US-A- 2 496 702
- US-A- 3 779 037
- US-A- 4 335 963

## Beschreibung

Die Erfindung bezieht sich auf ein hydrostatisch-mechanisches Getriebe zum Antrieb einer Mischtrommel. Insbesondere zum Antrieb einer Mischtrommel eines Transportbeton-Mischers. Die Trommel eines Transportbeton-Mischers ist in einem bestimmten Winkel auf das Fahrgestell des Transportbeton-Mischers aufgebaut, so daß die eine Seite der Trommel, welche mit dem Trommelantrieb verbunden ist, niedriger ist, als die gegenüberliegende Seite, welche mit der Befüll- und Entleeröffnung versehen ist. Das Mischgut erzeugt eine Gewichtskraft, welche in Abhängigkeit des Einbauwinkels der Trommel durch eine Radialkraft und eine Axialkraft dargestellt werden kann. Bei unebenem Untergrund treten Verwindungen des Fahrgestells auf, welche durch die Schiefstellung des Antriebsflansches des Trommelantriebes aufgenommen werden müssen.

Aus der DE 43 13 025 A1 ist ein Antrieb einer Mischtrommel bekanntgeworden, welcher aus einem in das Getriebegehäuse integrierten Hydraulikmotor besteht, welcher ein inneres Zentralrad einer Planetenstufe antreibt, dessen Steg über eine Zahnkupplung eine Antriebswelle antreibt. Die vom Hydraulikmotor erzeugten druckabhängigen Axialkräfte werden über ein Lager aufgenommen. Die Antriebswelle ist über ein Pendelrollenlager, welches die radialen und axialen Kräfte der Trommel und des Mischguts aufnimmt, gelagert. Durch das Pendelrollenlager und die Zahnkupplung, welche mit gebogenen Zähnen ausgeführt ist, ist eine Schiefstellung des Antriebsflansches möglich.

Wird die Mischtrommel mit einem Winkel eingebaut, bei dem die Trommel eine steile Lage einimmt, treten größere Axialkräfte auf. Bei größeren Axialkräften auf das Pendelrollenlager verschiebt sich der Innenring des Pendelrollenlagers und die Kräfte werden hauptsächlich nur von einer Rollenreihe des zweireihigen Pendelrollenlagers aufgenommen. Durch diese Belastung verringert sich die Lebensdauer des Pendelrollenlagers.

Der vorliegenden Erfindung liegt die Aufgabe zugrunde, die auf das Trommellager wirkende Axialkraft zu verringern, um entweder die Lebensdauer des Trommellagers zu erhöhen, oder die Verwendung eines in den Abmessungen kleineren Trommellager zu ermöglichen.

Die der Erfindung zugrunde liegende Aufgabe wird dadurch gelöst, daß die vom Hydraulikmotor erzeugte Axialkraft nicht über ein Lager aufgenommen wird, sondern diese Kraft auf den Antriebsflansch geleitet wird um dort der Axialkraft, resultierend aus der Gewichtskraft der Trommel und des Mischgutes, entgegen zu wirken.
Dadurch wird die Axialkraft, welche auf das Trommellager wirkt, verringert, so daß die Kräfte im Trommellager auf beide Rollenreihen gleichmäßig verteilt werden. Dadurch läßt sich die Lebensdauer des Trommellagers erhöhen oder ein Trommellager mit kleineren Abmessungen verwenden. Da die Axialkraft des Hydraulikmotors druckabhängig ist und das benötigte Drehmoment und somit der Druck des Hydraulikmotors vom Füllungsgrad der Trommel abhängt, steigt die Axialkraft des Hydromotors immer dann, wenn die Axialkraft, resultierend aus der Gewichtskraft der Trommel und der Füllung, durch erhöhen des Füllungsgrades der Trommel ansteigt. Die Trommelgröße und die damit verbundene Menge des Mischgutes bestimmt das von dem Trommelantrieb zu erbringende Drehmoment. Bei kleineren Trommeln, welche ein geringeres Drehmoment benötigen, besteht die Erfindung aus einem Hydraulikmotor, dessen rotierender Teil direkt mit dem äußeren Teil der Zahnkupplung drehfest verbunden ist. Die Axialkraft des Hydraulikmotors wird vom rotierenden Teil des Hydraulikmotors auf den Antriebsflansch übertragen. Auf den Antriebsflansch wirken somit eine Radialkraft und die aus der Gewichtskraft resultiernde Axialkraft und die dieser Axialkraft entgegengerichtete Axialkraft des Hydraulikmotors. Damit die Axialkraft des Hydromotors, auch bei einer, durch eine Verwindung des Fahrgestells erzeugte Schiefstellung des Antriebsflansches, übertragen werden kann, ist die Übertragungsfläche auf der Seite des Antriebsflansches sphärisch ausgeführt. Bei größeren Trommeln, welche ein größeres Drehmoment benötigen, besteht die Erfindung aus einem Hydraulikmotor, dessen rotierender Teil direkt mit einer zentralen Welle eines Planetentriebes verbunden ist. Je nach Drehmomenterfordernis kann die Antriebseinheit auch aus mehreren Planetenstufen bestehen. Der Steg dieses Planetentriebes ist mit dem äußeren Teil der Zahnkupplung drehfest verbunden. Das Hohlrad des Planetentriebes ist drehfest mit dem Getriebegehäuse verbunden. Die Axialkraft des Hydraulikmotors wird vom rotierenden Teil des Hydraulikmotors über das innere Zentralrad des Planetentriebes auf den Antriebsflansch übertragen. Auf den Antriebsflansch wirken somit eine Radialkraft und die aus der Gewichtskraft resultiernde Axialkraft und die dieser Axialkraft entgegengerichtete Axialkraft des Hydraulikmotors. Damit die Axialkraft des Hydromotors, auch bei einer, durch eine Verwindung des Fahrgestells erzeugte Schiefstellung des Antriebsflansches, übertragen werden kann, ist die übertragungsfläche auf der Seite des Antriebsflansches sphärisch ausgeführt. Soll die sphärische Übertragungsfläche nur die Gleitbewegung durch die Schiefstellung des Antriebsflansches übertragen, so kann zwischen dem inneren Zentralrad und dem Antriebsflansch ein Lager, welches als Wälzlager oder Gleitlager ausgeführt sein kann, vorhanden sein. Damit der Steg des Planetentriebes axial fixiert ist kann dieser über eine Lagerung mit dem Getriebegehäuse verbunden sein, oder über die Lagerung zwischen sphärischer Fläche und innerem Zentralrad fixiert werden.

Das Getriebegehäuse kann als Reservoir für den Hydraulikreislauf des Hydraulikmotors verwendet werden, aus dem über ein Filterelement Hydraulikflüssigkeit entnommen und über eine Öffnung im Getriebegehäuse Hydraulikflüssigkeit zurückgeführt werden kann.

Weitere für die Erfindung wesentliche Merkmale sowie die daraus resultierenden Vorteile sind der nachfolgenden Beschreibung zu entnehmen.
Es zeigen:
- Fig. 1: ein hydrostatisch-mechanisches Getriebe für geringere Drehmomente und
- Fig. 2: ein hydrostatisch-mechanisches Getriebe für höhere Drehmomente.

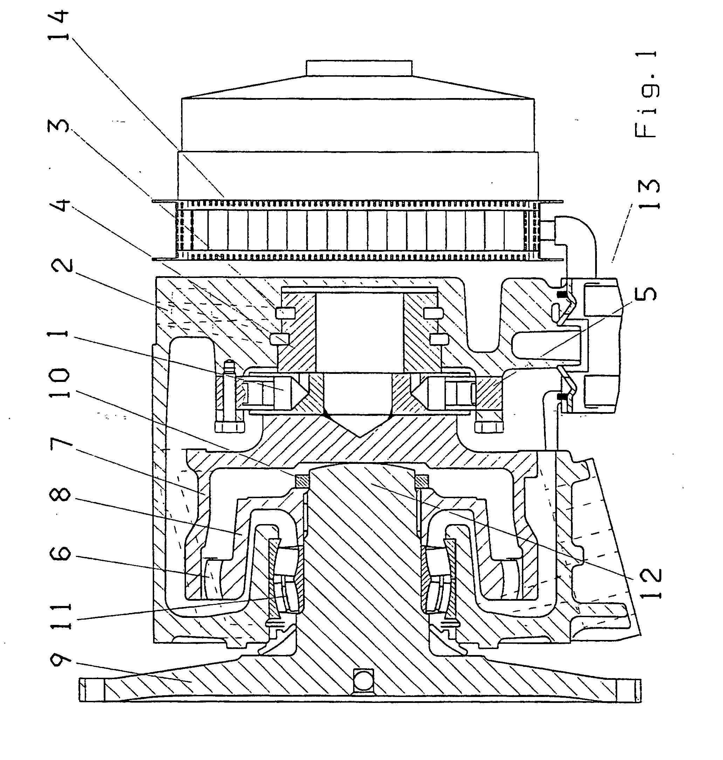

In Fig. 1 ist ein langsam laufender, außen abgestützter Hydraulikmotor 1 in ein Getriebegehäuse 2 eingebaut. Die Differenz der Ringflächen 3 im Ölverteiler 4 des Hydraulikmotors 1 erzeugen eine druckabhängige Axialkraft. Der Druck ist proportional zum abgegebenen Drehmoment des Hydraulikmotors 1. Der rotierende Teil 5 des Hydraulikmotors 1 ist drehfest mit der Zahnkupplung 6 verbunden oder mit dieser einstückig ausgebildet. Die Zahnkupplung 6 besteht aus einem äußeren Teil 7 mit geraden Zähnen und einem inneren Teil 8 mit gebogenen Zähnen, um das Drehmoment auch unter einem Fehlwinkel übertragen zu können. Das innere Teil 8 ist drehfest mit dem Antriebsflansch 9 verbunden und in axialer Richtung durch ein Sicherungselement 10 fixiert. Der Innenring des Trommellagers 11 ist zwischen dem Antriebsflansch 9 und dem inneren Teil 8 der Zahnkupplung 6 fixiert. Der Außenring des Trommellagers 11 ist im Getriebegehäuse 2 fixiert. Das Trommellager 11 ist vorzugsweise als Pendelrollenlager ausgeführt, um eine Schiefstellung des Antriebsflansches 9 zu ermöglichen. Die Kontaktfläche 12 zwischen dem Antriebsflansch 9 und dem rotierenden Teil 5 des Hydraulikmotors 1 ist sphärisch ausgeführt damit die Axialkraft auch bei einer Schiefstellung des Antriebsflansches 9 übertragen werden kann. Der Antriebsflansch 9 ist drehfest mit einer nicht dargestellten Trommel verbunden, von welcher die Radial- und Axialkräfte in den Antriebsflansch 9 geleitet werden. Am Getriebegehäuse 2 befindet sich ein Filterelement 13 und ein Kühler 14, durch den die Hydraulikflüssigkeit fließt und dann gekühlt durch eine nicht dargestellte Öffnung im Getriebegehäuse 2 in dieses zurückfließen kann. Das Getriebegehäuse 2 kann auch ohne Filterelement 13 und Kühler 14, jedoch mit einer Öffnung durch welche das Lecköl des Hydraulikmotors entweichen kann, ausgeführt sein.
Wird ein Hydraulikmotor 1 eingesetzt welcher nicht ausschließlich Axialkräfte erzeugt, so können die Radialkräfte über eine Lagerung in radialer Richtung abgestützt werden.

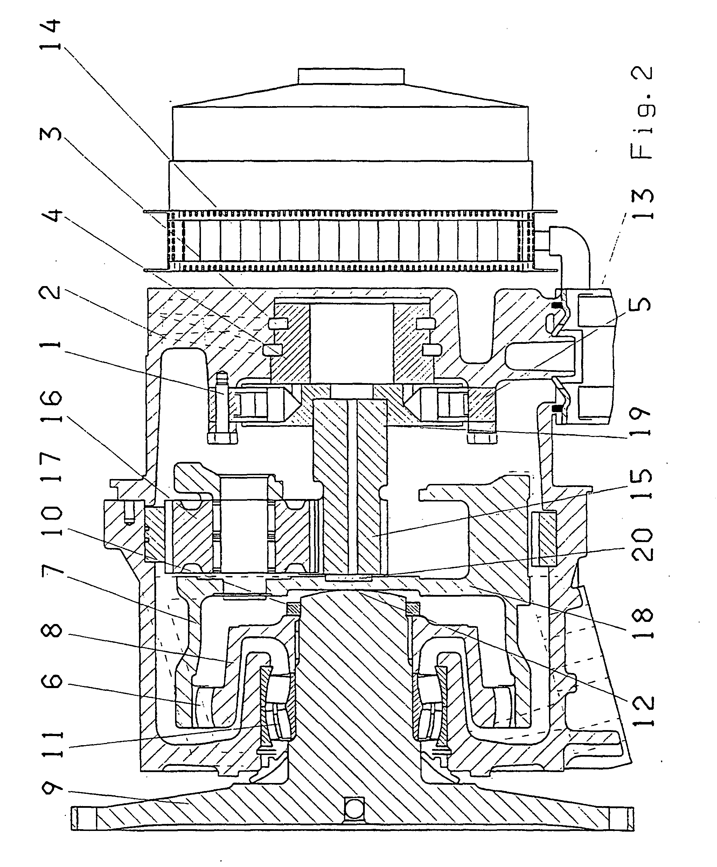

In Fig. 2 ist ein langsam laufender, außen abgestützter Hydraulikmotor 1 in ein Getriebegehäuse 2 eingebaut.

Die Differenz der Ringflächen 3 im Ölverteiler 4 des Hydraulikmotors 1 erzeugen eine druckabhängige Axialkraft. Der Druck ist proportional zum abgegebenen Drehmoment des Hydraulikmotors 1. Der rotierende Teil 5 des Hydraulikmotors 1 ist drehfest mit der inneren Zentralwelle 15 eines Planetentriebes 16 verbunden. Das Hohlrad 17 des Planetentriebes 16 ist drehfest mit dem Getriebegehäuse 2 verbunden. Der Steg 18 ist drehfest mit dem äußeren Teil 7 der Zahnkupplung 6 verbunden oder mit dieser einstückig ausgebildet. Die Zahnkupplung 6 besteht aus einem äußeren Teil 7 mit geraden Zähnen und einem inneren Teil 8 mit gebogenen Zähnen, um das Drehmoment auch unter einem Fehlwinkel übertragen zu können. Das innere Teil 8 ist drehfest mit dem Antriebsflansch verbunden und in axialer Richtung durch ein Sicherungselement 10 fixiert. Der Innenring des Trommellagers 11 ist zwischen dem Antriebsflansch 9 und dem inneren Teil 8 der Zahnkupplung 6 fixiert. Der Außenring des Trommellagers 11 ist im Getriebegehäuse 2 fixiert. Das Trommellager 11 ist vorzugsweise als Pendelrollenlager ausgeführt, um eine Schiefstellung des Antriebsflansches 9 zu ermöglichen. Die Kontaktfläche 12 zwischen dem Antriebsflansch 9 und dem Steg 18 des Planetentriebes 16 ist sphärisch ausgeführt damit die Axialkraft auch bei einer Schiefstellung des Antriebsflansches 9 übertragen werden kann. Die innere Zentralwelle 15 weist auf der einen Seite eine Schulter 19 auf um die Axialkräfte des Hydraulikmotors 1 aufnehmen zu können und auf der gegenüberliegenden Seite liegt die innere Zentralwelle 15 an einer Lagerstelle 20 im Steg 18 an. Die Axialkräfte des Hydromotors 1 werden über die innere Zentralwelle 15 auf die Lagerstelle 20 in den Steg 18 und vom Steg 18 auf die Kontaktfläche 12 des Antriebsflansches 9 übertragen. Wird der Steg 18 direkt im Gehäuse 2 gelagert so kann die Lagerstelle 20 entfallen und die innere Zentralwelle 15 liegt direkt an der Kontaktfläche 12 der Antriebswelle 9 an. Die Antriebswelle 9 ist drehfest mit einer nicht dargestellten Trommel verbunden, von welcher die Radial- und Axialkräfte in den Antriebsflansch 9 geleitet werden. Am Getriebegehäuse 2 befindet sich ein Filterelement 13 und ein Kühler 14, welcher die Hydraulikflüssigkeit kühlt, welche danach durch eine nicht dargestellte Öffnung im Getriebegehäuse 2 in dieses zurückfließen kann. Das Getriebegehäuse 2 kann auch ohne Filterelement 13 und Kühler 14, jedoch mit einer Öffnung durch welche das Lecköl des Hydraulikmotors 1 entweichen kann, ausgeführt sein. Wird ein Hydraulikmotor 1 eingesetzt welcher nicht ausschließlich Axialkräfte erzeugt, so können die Radialkräfte über eine Lagerung in radialer Richtung abgestützt werden.

### Bezugszeichen

- 1: Hydraulikmotor
- 2: Getriebegehäuse
- 3: Ringflächen
- 4: Ölverteiler
- 5: rotierender Teil
- 6: Zahnkupplung
- 7: äußerer Teil
- 8: innerer Teil
- 9: Antreibsflansch
- 10: Sicherungselement
- 11: Trommellager
- 12: Kontaktfläche
- 13: Filterelement
- 15: innere Zentralwelle
- 16: Planetentrieb
- 17: Hohlrad
- 18: Steg
- 19: Schulter
- 20: Lagerstelle

## Patentansprüche

1. Hydrostatisch-mechanisches Getriebe, insbesondere zum Antrieb einer Mischtrommel eines Transportbeton-Mischers, mit einem Hydraulikmotor (1), mit einem rotierenden Teil (5), einem Getriebegehäuse (2) zur Aufnahme eines Hydraulikmotors (1) und einer Zahnkupplung (6) in Form einer Bogenzahnkupplung, mit einem inneren Teil (8) und einem äußeren Teil (7), einem Antriebsflansch (9) und einem Trommellager (11), wobei ein inneres Teil (8) der Zahnkupplung (6) mit dem Antriebsflansch (9), auf welchem sich das Trommellager (11) befindet, drehfest verbunden ist, **dadurch gekennzeichnet, daß** das Drehmoment abgebende, rotierende Teil (5) des Hydraulikmotors (1) drehfest mit einem äußeren Teil (7) einer Zahnkupplung (6) verbunden ist, wobei die vom Hydraulikmotor (1) erzeugten, druckabhängigen Axialkräfte über den Antriebsflansch (9) in ein Trommellager (11) geleitet werden.

2. Getriebe nach dem Anspruch 1, **dadurch gekennzeichnet, daß** die Fläche (12) zwischen einem Antriebsflansch (9) und einem rotierende Teil (5) eines Hydraulikmotors (1) als sphärische Fläche ausgebildet ist.

3. Hydrostatisch-mechanisches Getriebe, insbesondere zum Antrieb einer Mischtrommel eines Transportbeton-Mischers, mit einem Hydraulikmotor(1) mit einem rotierenden Teil (5), einem Getriebegehäuse (2) zur Aufnahme eines Hydraulikmotors (1), mindestens eines Planetentriebes (16) mit innerer Zentralwelle (15), Steg (18) und einem Hohlrad (17), einer Zahnkupplung (6) in Form einer Bogenzahnkupplung mit einem inneren Teil (8) und einem äußeren Teil 7), einem Antriebsflansch (9) und einem Trommellager 11), wobei das rotierende Teil (5) des Hydraulikmotors (1), welches drehfest mit einer inneren Zentralwelle (15) des Planetentriebes (16) verbunden ist, einem Steg (18) des Planetentriebes (16), welcher mit einem äußeren Teil (7) einer Zahnkupplung (6) drehfest verbunden ist, und einem inneren Teil (8) einer Zahnkupplung (6), welches mit einem Antriebsflansch (9), auf welchem sich das Trommellager (11) befindet, drehfest verbunden ist, **dadurch gekennzeichnet, daß** die von einem Hydraulikmotor (1) erzeugten, druckabhängigen Axialkräfte über die innere Zentralwelle (15) und den Antriebsflansch (9) in ein Trommellager (11) geleitet werden.

4. Getriebe nach Anspruch 3, **dadurch gekennzeichnet, daß** die von einem Hydraulikmotor (1) erzeugten Axialkräfte über eine innere Zentralwelle (15) über eine Lagerstelle (20), welche mit einem Steg (18) verbunden ist, auf einen Antriebsflansch (9) in ein Trommellager (11) geleitet werden.

5. Getriebe nach Anspruch 3 und 4, **dadurch gekennzeichnet, daß** eine Fläche (12) zwischen einem Antriebsflansch (9) und einem Steg (18) als sphärische Fläche ausgebildet ist.

6. Getriebe nach Anspruch 3, **dadurch gekennzeichnet, daß** eine Fläche (12) zwischen einer inneren Zentralwelle (15) und einem Antriebsflansch (9) als sphärische Fläche ausgebildet ist.

## Claims

1. Hydrostatic mechanical transmission, especially for driving the mixing drum of a truck mixer, with a hydraulic motor (1), with a rotating element (5), a transmission housing (2) to accommodate a hydraulic motor (1) and a dog clutch (6) in the form of a curved teeth coupling, with an inner element (8) and an outer element (7), a drive flange (9) and a drum bearing (11), with an inner element (8) of the dog clutch (6) being nonrotationally connected to the drive flange (9), on which the drum bearing (11) is located, **characterized in that** the torque-delivering rotating element (5) of the hydraulic motor (1) is nonrotationally connected to an outer element (7) of a dog clutch (6), with the pressure-dependent axial forces produced by the hydraulic motor (1) being transmitted to a drum bearing (11) via the drive flange (9).

2. Transmission according to claim 1, **characterized in that** the surface (12) between a drive flange (9) and a rotating element (5) of a hydraulic motor (1) is designed as a spherical surface.

3. Hydrostatic mechanical transmission, especially for driving the mixing drum of a truck mixer, with a hydraulic motor (1) with a rotating element (5), a transmission housing (2) to accommodate a hydraulic motor (1), at least one planetary drive (16) with internal central shaft (15), planet spider (18) and an internal gear (17), a dog clutch (6) in the form of a curved teeth coupling with an inner element (8) and an outer element (7), a drive flange (9) and a drum bearing (11), with the rotating element (5) of the hydraulic motor (1), which is nonrotationally connected to an inner central shaft (15) of the planetary drive (16), being nonrotationally connected to a planet spider (18) of the planetary drive (16), which is nonrotationally connected to an outer element (7) of a dog clutch (6), and an inner element (8) of a dog clutch (6), which is nonrotationally connected to a drive flange (9) on which the drum bearing (11) is located, **characterized in that** the pressure-dependent axial forces produced by the hydraulic motor (1) are transmitted to a drum bearing (11) via the inner central shaft (15) and the drive flange (9).

4. Transmission according to claim 3, **characterized in that** the axial forces produced by a hydraulic motor (1) are transmitted to a drum bearing (11) via an inner central shaft (15), via a bearing position (20), which is connected to a planet spider (18), and a drive flange (9).

5. Transmission according to claims 3 and 4, **characterized in that** a surface (12) between a drive flange (9) and a planet spider (18) is designed as a spherical surface.

6. Transmission according to claim 3, **characterized in that** a surface (12) between an inner central shaft (15) and a drive flange (9) is designed as a spherical surface.

## Revendications

1. Transmission hydrostatique-mécanique, en particulier pour l'entraînement d'un tambour mélangeur rotatif d'un malaxeur de béton pour transporter du béton, dotée d'un moteur hydraulique (1), d'une partie en rotation (5), d'un carter de boîte de vitesses (2) pour le logement d'un moteur hydraulique (1) et d'un embrayage à crabots (6) sous forme d'un accouplement à dents courbées, doté d'une partie intérieure (8) et d'une partie extérieure (7), d'un manchon de sortie (9) et d'un roulement à tonneaux (11 ), sachant qu'une partie intérieure (8) de l'embrayage à crabots (6) est fixé en rotation avec le manchon de sortie (9) sur lequel se trouve le roulement à tonneaux (11 ), **car actérisée en ce que** la partie en rotation et débitant un couple (5) du moteur hydraulique (1) est fixée en rotation avec une partie extérieure (7) d'un embrayage à crabots (6), sachant que les forces axiales dépendantes de la pression et produites par le moteur hydraulique (1) sont transmises par l'intermédiaire d'un manchon de sortie (9) à un roulement à tonneaux (11).

2. Transmission selon la revendication 1, **caractérisée en ce que** la surface (12) entre un manchon de sortie (9) et une partie en rotation (5) d'un moteur hydraulique (1) est réalisée comme surface sphérique.

3. Transmission hydrostatique-mécanique, en particulier pour l'entraînement d'un tambour mélangeur rotatif d'un malaxeur de béton pour transporter du béton, dotée d'un moteur hydraulique (1), d'une partie en rotation (5), d'un carter de boîte de vitesses (2) pour le logement d'un moteur hydraulique (1), d'au moins une boîte épicycloïdale (16) dotée d'un arbre central intérieur (15), d'une nervure (18) et d'une couronne (17), d'un embrayage à crabots (6) sous forme d'un accouplement à dents courbées, doté d'une partie intérieure (8) et d'une partie extérieure (7), d'une bride d'entrée (9) et d'un roulement à tonneaux (11 ), sachant que la partie en rotation (5) du moteur hydraulique (1 ), laquelle est fixée en rotation avec un arbre central intérieur (15) de la boîte épicycloïdale (16), avec une nervure (18) de la boîte épicycloïdale (16), laquelle est fixée en rotation avec une partie extérieure (7) d'un embrayage à crabots (6), et avec une partie intérieure (8) d'un embrayage à crabots (6), laquelle est fixée en rotation avec une bride d'entrée (9) sur laquelle se trouve le roulement à tonneaux (11), **caractérisée en ce que** les forces axiales dépendantes de la pression et produites par le moteur hydraulique (1) sont transmises par l'intermédiaire d'un arbre central intérieur (15) et d'une bride d'entrée (9) à un roulement à tonneaux (11).

4. Transmission selon la revendication 3, **caractérisée en ce que** les forces axiales produites par un moteur hydraulique (1) sont transmises par l'intermédiaire d'un arbre central intérieur (15) et un point d'appui (20) qui est lié à une nervure (18), à un roulement à tonneaux (11) logé sur une bride d'entrée (9).

5. Transmission selon les revendications 3 et 4, **aractérisée** en ce qu'une surface (12) entre une bride d'entrée (9) et une nervure (18) est réalisée comme surface sphérique.

6. Transmission selon la revendication 3, **caractérisée en ce que** la surface (12) entre un arbre central intérieur (15) et une bride d'entrée (9) est réalisée comme surface sphérique.
